# EUROPÄISCHE PATENTSCHRIFT

(11) **EP 0 708 741 B1**
(45) Veröffentlichungstag und Bekanntmachung des Hinweises auf die Patenterteilung: **09.04.1997**
(21) Anmeldenummer: 95901983.7
(22) Anmeldetag: 12.12.1994
(51) Int. Cl.: C03B 33/07

(54) **VORRICHTUNG ZUM TEILEN VON VERBUNDGLAS**
DEVICE FOR SPLITTING MULTILAYER GLASS
DISPOSITIF POUR DECOUPER DU VERRE DE SECURITE FEUILLETE

(30) Priorität: 13.12.1993 AT 2514/93; 04.07.1994 AT 1319/94; 04.07.1994 AT 1321/94
(43) Veröffentlichungstag der Anmeldung: 01.05.1996
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.
(86) Internationale Anmeldenummer: AT9400193
(87) Internationale Veröffentlichungsnummer: WO9516640

(56) Entgegenhaltungen:
- EP-A- 0 596 852
- DE-A- 3 230 554

## Beschreibung

Die Erfindung betrifft eine Vorrichtung zum Teilen von Verbundglas, insbesondere Zwei-Scheiben-Verbundglas, mit zwei plattenförmigen Auflagen für das Verbundglas, wobei eine der beiden im wesentlichen horizontal ausgerichteten Auflagen im Maschinengestell starr befestigt und die andere Auflage um eine im Bereich zwischen den Auflagen angeordnete, horizontale Achse verschwenkbar gelagert und in Richtung der Ebene der maschinengestellfesten Auflage quer zu dieser beweglich ist, mit Einrichtungen zum Festlegen des Verbundglases an den Auflagen, die an den dem Bereich zwischen den beiden Auflagen benachbarten Rändern der Auflagen angeordnet sind, mit im Stoßbereich zwischen den beiden Auflagen verfahrbaren Schneidwerkzeugen zum Ritzen des Verbundglases auf beiden Seiten, und mit einer Einrichtung zum Durchtrennen der zwischen den beiden Glasscheiben des Verbundglases angeordneten Kunststofffolie.

Eine derartige Vorrichtung ist aus der EP 596 852 A1 bekannt. Bei dieser bekannten Vorrichtung wird im Gegensatz zu früheren Vorschlägen, in welchen die Folie zwischen den Glasscheiben des Verbundglases durch Wärmezufuhr abgeschmolzen wird, vorgeschlagen, die Folie mit Hilfe eines Plasmastrahls, der entlang der geöffneten Bruchlinie in dem Verbundglas bewegt wird, durchzutrennen. Diese Vorrichtung hat sich an sich bewährt, jedoch ist der Aufwand einen Plasmastrahl oder wie ebenfalls vorgeschlagenen einen Laserstrahl einzusetzen, relativ groß, sowohl was die Technik als auch was die Sicherheitsvorschriften betrifft.

Der Erfindung liegt die Aufgabe zugrunde, ausgehend von der Vorrichtung der eingangs genannten Gattung eine einfach aufgebaute und zuverlässig wirkende, ohne Wärmezufuhr arbeitende Vorrichtung zum Teilen von Verbundglas anzugeben.

Erfindungsgemäß wird diese Aufgabe dadurch gelöst, daß die Vorrichtung zum Durchtrennen der Kunststoffolie eine im Bereich zwischen den beiden Auflagen verschiebbare Schneideinrichtung mit einer Klinge ist.

Vorteilhafte und bevorzugte Ausgestaltungen der Erfindung sind Gegenstand der Unteransprüche.

Bei der erfindungsgemäßen Vorrichtung wird zum Durchtrennen der Folie zwischen den Glasscheiben des Verbundglases eine Schneideinrichtung mit einer Klinge verwendet, was den Vorteil hat, daß besondere Maßnahmen zum Erzeugen eines Laser- oder Plasmastrahls oder das Aufheizen von Luft oder das Betreiben einer Infrarotstrahlungsquelle, entfallen. Es genügt einfach, die Klinge der Schneideinrichtung entlang des geöffneten Bruches im Verbundglas zu bewegen, was ohne weiteres möglich ist, da ohnedies Schlitten und Führungen vorgesehen sind, entlang welcher die Schneidwerkzeuge, die von oben und von unten her auf das Verbundglas einwirken, bewegt werden.

Weitere Einzelheiten, Merkmale und Vorteile der Erfindung ergeben sich aus der nachstehenden Beschreibung von Ausführungsbeispielen der Erfindung, in welcher auf die angeschlossenen, teilweise schematischen Zeichnungen Bezug genommen wird. Es zeigt:
Fig. 1 eine erste Ausführungsform einer Vorrichtung zum Trennen von Verbundglas in Seitenansicht,
Fig. 2 eine andere Ausführungsform,
Fig. 3 die Möglichkeit, eine erfindungsgemäße Vorrichtung unmittelbar neben einem Glasschneidetisch anzuordnen,
Fig. 4 eine andere Ausführungsform einer Vorrichtung zum Trennen von Verbundglas im Bereich der Stoßfuge zwischen den beiden Auflagen,
Fig. 5 und 6 Einzelteile der Klemmvorrichtung zum Festlegen von Verbundglas an den Auflagen,
Fig. 7 in Schrägansicht die Schneideinrichtung mit der Klinge,
Fig. 8 die Schneideinrichtung in einer anderen Ansicht und
Fig. 9.1. bis 9.4.1. einzelne Phasen beim Trennen von Verbundglas mit der erfindungsgemäßen Vorrichtung, die
Fig. 10 zeigt das Maschinengestell ohne die Auflageplatten und die Klemmeinrichtungen,
Fig. 11 das Maschinengestell in anderer Ansicht und die
Fig. 12, 13 und 14 Einzelheiten der Lagerung der verschwenkbaren Auflage in verschiedenen Ansichten.

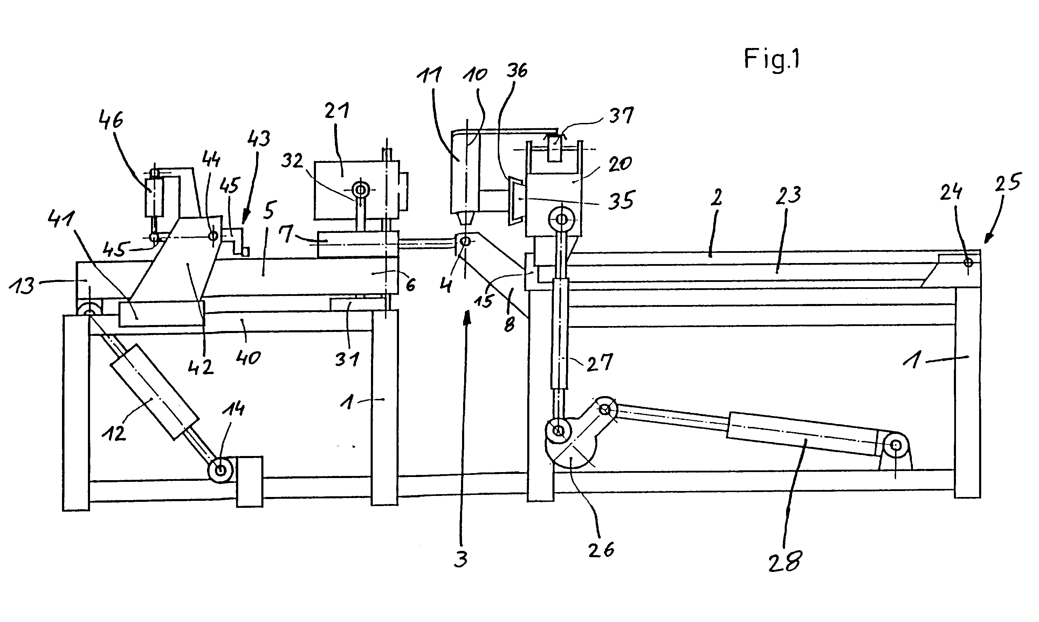

Die in Fig. 1 gezeigte Ausführungsform einer Verbundglasschneidemaschine gemäß der Erfindung besitzt ein Maschinengestell 1, in dem in Fig. 1 rechts eine gestellfeste Auflage 2 für das zu schneidende Verbundglas montiert ist. Die gestellfeste Auflage 2 ist beispielsweise mit einem Filzbelag versehen und weist Öffnungen auf, die wahlweise mit Überdruck oder Unterdruck beaufschlagt werden können, so daß das Zuführen von zu teilendem Verbundglas erleichtert wird (Luftkissen) bzw. das Festhalten derselben möglich ist, wenn die Öffnungen in der Auflage 2 mit Unterdruck beaufschlagt werden.

Mit Abstand (Spalt 3) neben der gestellfesten Auflage 2 ist im Maschinengestell 1 eine um eine Achse 4 verschwenkbare Auflage 5 (links in Fig. 1) vorgesehen. Im Bereich des dem Spalt 3 zwischen den beiden Auflagen 2 und 5 zugekehrten Randes 6 der verschwenkbaren Auflage 5 sind zwei Druckmittelmotore 7 montiert, deren Kolbenstangen verschwenkbar an Auslegern 8 gelagert sind. Die Ausleger 8 sind an den beiden Seiten des Maschinengestells 1 im Bereich der gestellfesten Auflage 2 montiert. Die Achse 4, um welche die Auflage 5 verschwenkbar ist, befindet sich in der Symmetrieebene 10 des Spaltes 3 zwischen den Auflagen 2 und 5, in der auch die Schneidwerkzeuge (eines von oben und eines von unten her) sowie die Schneideinrichtung 11 zum Trennen der zwischen den Glasscheiben des Verbundglases vorgesehenen Folie wirksam werden.

Zum Verschwenken der in Fig. 1 linken Auflage 5 ist ein Druckmittelmotor 12 vorgesehen, der an dem dem Spalt 3 zwischen den beiden Auflagen 2 und 5 gegenüberliegenden Rand 13 des Rahmens der Auflage 5 etwa in dessen Mitte angelenkt ist und sich mit seinem anderen Ende in einem maschinengestellfesten Lager 14 abstützt.

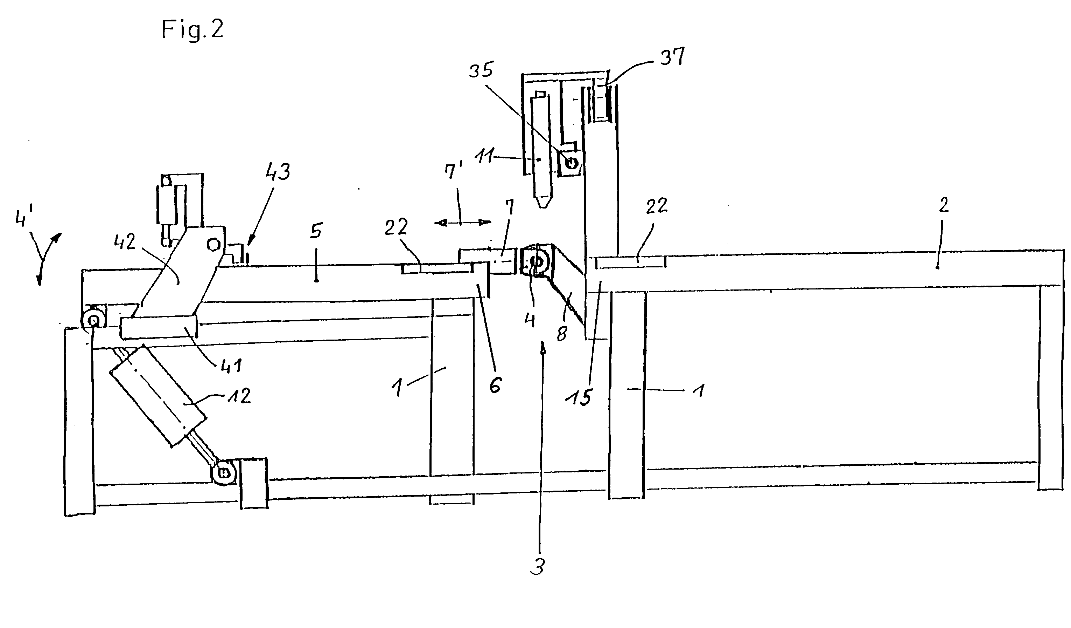

Den beiden einander zugekehrten Rändern 15 und 6 der beiden Auflagen 2 und 5 sind Klemmbalken 20 und 21 zugeordnet, die auf die Auflagen 2 und 5 zu absenkbar sind, um zu teilendes Verbundglas an den Auflagen 2 und 5 festzulegen. Zusätzlich können in den Auflagen 2 und 5 im Bereich ihrer einander zugekehrten Ränder 6, 15 mit Unterdruck beaufschlagbare Sauger (ähnlich der Sauger 22 von Fig. 2) vorgesehen sein, um das Festhalten des zu teilenden Verbundglases zu unterstützen. Insbesondere können diese Sauger auch dazu dienen, Verbundglas, das für einen Schnitt gegenüber den Schneidwerkzeugen entsprechend ausgerichtet worden ist, festzulegen, bis die Klemmbalken 20, 21 abgesenkt worden sind.

Der der gestellfesten Auflage 2 zugeordnete Klemmbalken 20 wird von zwei Lenkern 23 getragen, die über Kugelzapfen 24 im Bereich der vom Spalt 3 zwischen den beiden Auflagen 2, 5 abgekehrten Rand 25 der gestellfesten Auflage 2 im Maschinengestell 1 verschwenkbar abgestützt sind. Zum Heben und Senken des Klemmbalkens 20 gegenüber der gestellfesten Auflage 2 ist ein Kurbel-Schubstangentrieb (Kurbel 26, Schubstange 27, Zylinder 28) vorgesehen.

Der Klemmbalken 21 an der beweglichen Auflage 5 wird im Beispiel von Fig. 1 von zwei Führungsstangen 30 geführt, die im Bereich der Enden des Klemmbalkens 21 vorgesehen sind und dort vorgesehene Führungsbuchsen durchsetzen. Zum Heben und Senken des Klemmbalkens 21 sind an seinen beiden Enden angreifende Spindelantriebe 31 vorgesehen, deren Spindeln 32 mit dem Klemmbalken 21 verbunden sind. Die Führungsstangen 30 und die Spindelmuttern der Spindelantriebe 31 sind am Rahmen der Auflage 5 montiert. Um ein gleichmäßiges Heben des der beweglichen Auflage 5 zugeordneten Klemmbalkens 21 zu bewirken, sind die beiden Spindelantriebe 31 mit einem gemeinsamen Antriebsmotor über Wellen gekuppelt.

An dem der gestellfesten Auflage 2 zugeordneten Klemmbalken 20 ist eine Führungsschiene 35 vorgesehen, an der über einen Schlitten 36 ein Schneidwerkzeug und die Schneideinrichtung 11 verschiebbar geführt sind. Zum Verschieben des Schneidwerkzeuges und der Schneideinrichtung 11 entlang des Spaltes 3 zwischen den beiden Auflagen 2 und 5 in der Symmetrieebene 10 ist ein Endlosriemenantrieb 37 vorgesehen, mit dem der Schlitten 36 gekuppelt ist.

Ein Schneidwerkzeug, das von unten her auf das Verbundglas einwirkt, um dessen untere Scheibe zu ritzen, ist auf einer (nicht gezeigten) Führungsschiene geführt ist, die an dem dem Spalt 3 zwischen den beiden Auflagen 2 und 5 zugekehrten Rand 15 der gestellfesten Auflage 2 befestigt ist.

Auf im Maschinengestell 1 montierten Führungsschienen 40 sind beidseits der beweglichen Auflage 5 Schlitten 41 geführt, die an nach oben ragenden Armen 42, die miteinander verbunden sind, eine Anschlagleiste 43 tragen. Die Anschlagleiste 43 ist an den Armen 42 um eine zur Auflage 5 parallele Achse 44 verschwenkbar gelagert, so daß sie angehoben oder abgesenkt werden kann. Hiezu ist die Anschlagleiste 43 an Hebeln 45 befestigt, die um die Achse 44 verschwenkbar sind, und an der ein Druckmittelzylinder 46 angreift. Das Anheben und Absenken der Anschlagleiste 43 dient dazu, die Bewegungen der verschwenkbaren Auflage 5 nicht zu behindern.

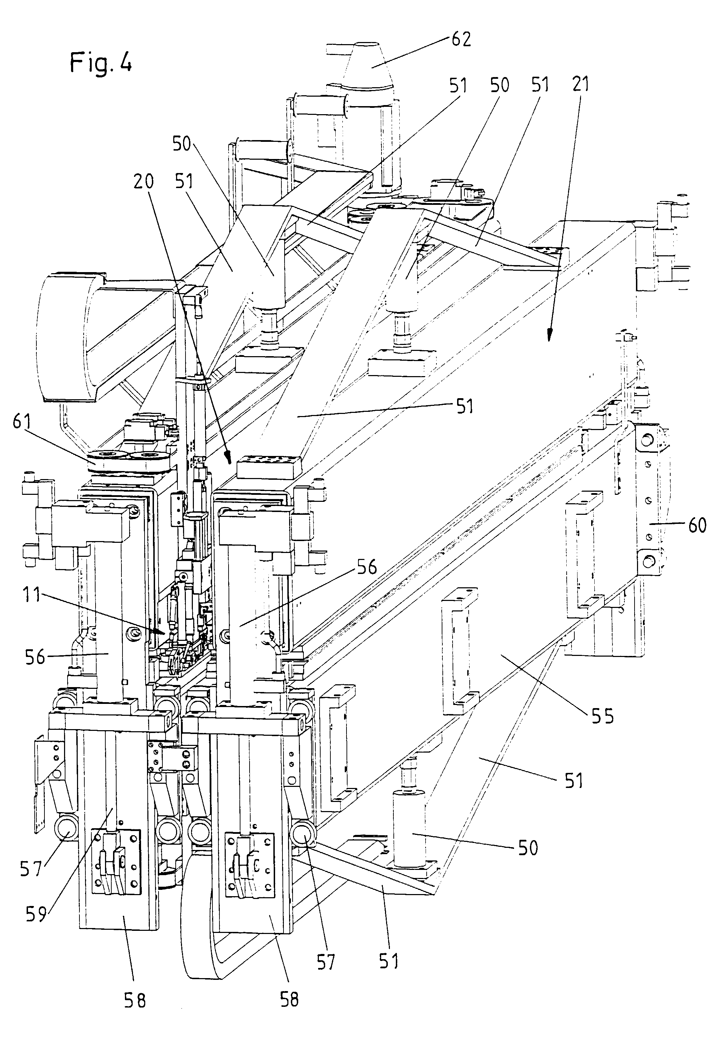

Um das Durchbiegen der Klemmbalken 20, 21, wenn diese Verbundglas gegen die Auflagen 2 und 5 pressen, zu verhindern, können in der Mitte beider Klemmbalken 20, 21 nach oben weisende Steher 50 (Fig. 4) vorgesehen sein, von welchen Zugstangen 51 zu den beiden Enden der Klemmbalken 20, 21 geführt und dort befestigt sind. Durch Vorspannen der Zugstangen 51, indem die als Druckmittelzylinder ausgebildeten Steher 50 betätigt werden, werden auch die Klemmbalken 20, 21 vorgespannt, so daß Verbundglas gleichmäßig über die gesamte Länge gegen die Auflagen 2 und 5 gedrückt wird. Eine ähnlich aufgebaute Versteifung mit nach unten weisenden Stehern 50 kann an den dem Spalt 3 benachbarten Rändern 15, 6 der Auflagen 2 und 5 bzw. den dort befindlichen Teilen des Maschinengestells 1 bzw. des Rahmens der Auflagen 2, 5 vorgesehen sein (Fig. 4).

Die in Fig. 2 gezeigte Vorrichtung besitzt zwei Auflagen 2 und 5, die zum Erleichtern des Antransportes auch als Luftkissentische ausgebildet und/oder mit Fördermitteln (Transportbänder) ausgerüstet sein können. Die Auflagen 2 und 5 sind im Maschinengestell 1 montiert, wobei die Auflage 2 im Maschinengestell 1 starr montiert ist, wogegen die Auflage 5 um eine Achse 4 verschwenkbar (Pfeil 4') ist. Da die Auflage 5 über wenigstens zwei Druckmittelmotore 7 an maschinengestellfesten Lagern 4 befestigt ist, kann sie zusätzlich im Sinne des Doppelpfeiles 7' von der Auflage 2 wegbewegt und an diese wieder angenähert werden. Zum Ausführen der Schwenkbewegung der Auflage 5 ist wenigstens ein Druckmittelmotor 12 vorgesehen, der vorzugsweise ein doppelt wirkender Druckmittelmotor ist, dessen Null-Stellung der Lage der Auflage 5 entspricht, in der diese parallel zur Auflage 2 ausgerichtet ist.

Im Bereich des Spaltes 3 zwischen den Auflagen 2 und 5 ist ein Schneidwerkzeug und eine Schneideinrichtung 11 zum Durchtrennen der zwischen den Glasscheiben von Verbundglas vorgesehenen Kunststoffolie vorgesehen.

Im Maschinengestell 1 ist im Bereich der Auflage 5 noch der verschiebbare Anschlag 43 zum Festlegen der Schnittlage vorgesehen.

Um das zu teilende Verbundglas an den Auflagen 2 und 5 festlegen zu können, ist in den Auflagen 2 und 5 wenigstens eine Reihe aus Saugern 22, die über nicht gezeigte Leitungen mit einer Unterdruckquelle verbunden sind, vorgesehen. Diese Saugerreihen sind in der Nähe der dem Spalt 3 benachbarten Ränder 6, 15 der Auflagen 5 und 2 vorgesehen.

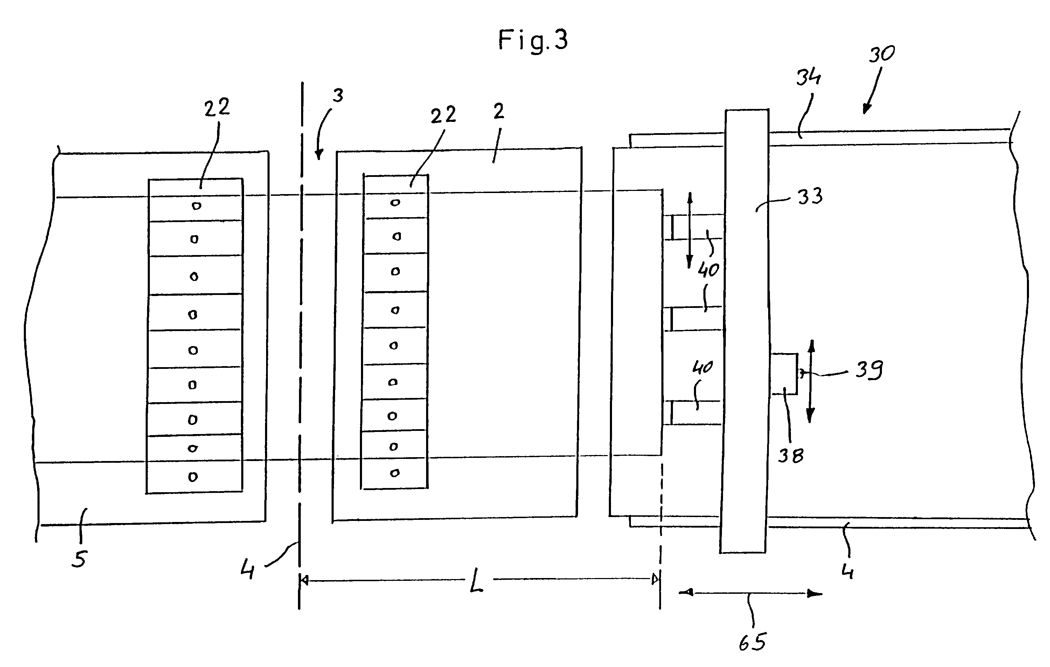

Wie insbesondere aus Fig. 3 ersichtlich, sind die Sauger 22 unmittelbar nebeneinander angeordnet. Die Sauger 22 können unabhängig voneinander mit Unterdruck beaufschlagt werden, so daß nur die Sauger 22 mit Unterdruck beaufschlagt werden, die von Verbundglas zur Gänze abgedeckt sind. Die außerhalb von Verbundglas liegenden Sauger 22 oder nur teilweise abgedeckte Sauger 22 werden nicht mit Unterdruck beaufschlagt. Hiezu kann eine automatische Steuerung vorgesehen sein, welche die Breite des Verbundglases erfaßt und die abgedeckten Sauger 22 aktiviert. Den Saugern 22 können aber auch Ventile zugeordnet sein, die schließen, wenn sich im Sauger 22 kein Unterdruck aufbaut. Die in Fig. 2 gezeigte Ausführungsform ist vornehmlich für dünnes Verbundglas bestimmt. Es versteht sich, daß auch Kombinationen der in den Fig. 1 bis 6 gezeigten Einrichtungen, mit welchen Verbundglas beim Ritzen, Brechen und Durchschneiden der Folie an den Auflagen 2 und 5 festgelegt und festgehalten wird, möglich sind.

Die in Fig. 3 in Draufsicht gezeigte Anordnung besteht aus einem Glasschneidetisch 30, entlang welchem eine Schneidbrücke 33 auf Führungsschienen 34 verfahrbar ist. Auf der Schneidbrücke 33 ist in ihrer Längsrichtung ein Schneidkopf 38 verfahrbar, der ein Ritzwerkzeug 39 zum Ritzen von Glasscheiben trägt.

Neben einem parallel zur Schneidbrücke 33 ausgerichteten Rand des Schneidtisches 30 ist eine Vorrichtung zum Teilen von Verbundglas angeordnet. Diese Vorrichtung kann eine der in den Fig. 1, 2 und 4 bis 14 gezeigte Ausführungsform haben.

Um Verbundglas entlang der in Fig. 3 strichliert eingezeichneten Null-Linie (= Achse 4) auszurichten, ist an der Schneidbrücke 33 ein Anschlag vorgesehen, der im gezeigten Ausführungsbeispiel aus drei Anschlagteilen 40 besteht. Die Anschläge 40 werden gegenüber der Null-Linie 4 durch Verstellen der Schneidbrücke 33 (Pfeil 65 in Fig. 3) so ausgerichtet, daß sie von der Null-Linie 4 den der Größe L des herzustellenden Abschnittes von Verbundglas entsprechenden Abstand haben. Nun wird Verbundglas herangefördert, bis seine vordere Kante an den Anschlagteilen 40 anliegt, worauf das Verbundglas geteilt werden kann. Zum Abtransport des abgetrennten Teiles von Verbundglas und zum Antransport von (normalem) Flachglas, das auf dem Schneidtisch 30 geritzt werden soll, werden die Anschläge 40 von der Auflagefläche des Glasschneidetisches 30 abgehoben.

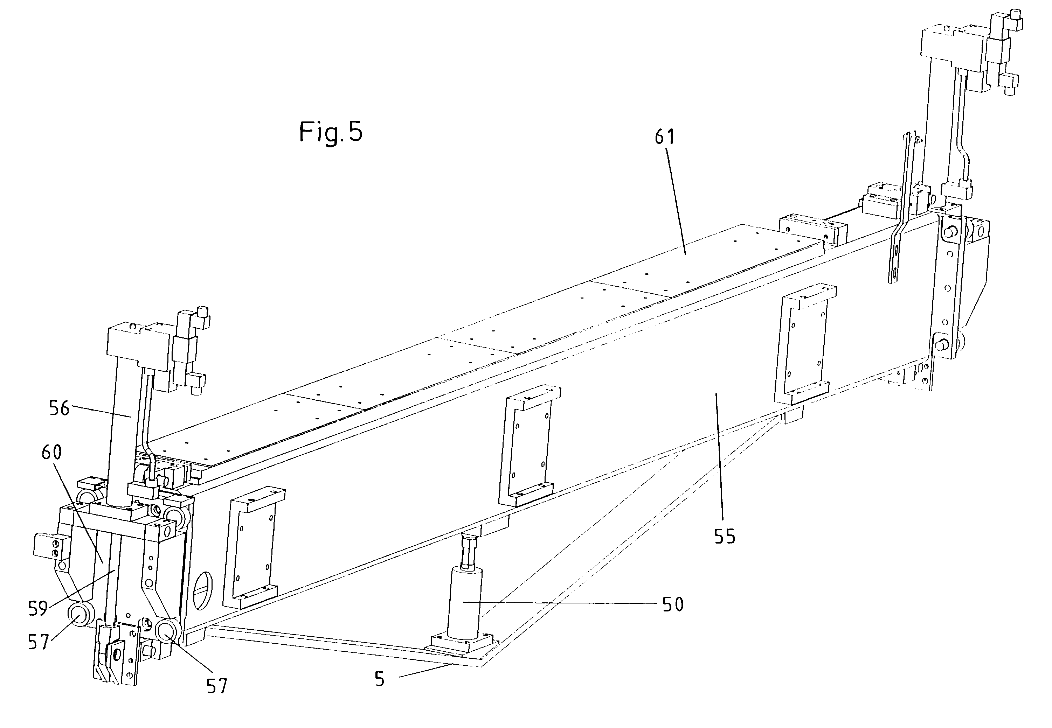

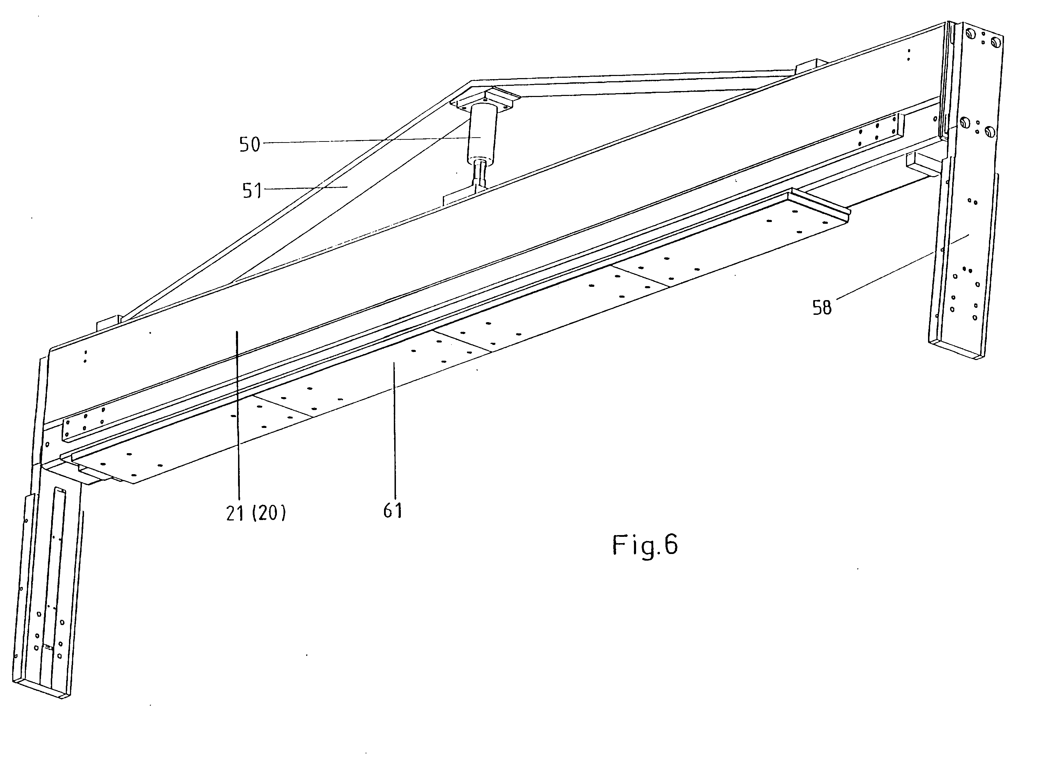

Bei der in den Fig. 4 bis 14 gezeigten Ausführungsform einer erfindungsgemäßen Vorrichtung sind im Bereich der am Spalt 3 benachbarten Enden der beiden Auflagen 2, 5 Klemmeinrichtungen 20, 21 der in Fig. 4 gezeigten Ausführungsform vorgesehen. Dabei sind die unterhalb der Auflagen 2, 5 angeordneten Teile der Klemmeinrichtungen (Versteifungsbalken 55) mit den die Auflagen 2 und 5 tragenden Maschinengestellteilen (feststehende Auflage 2 bzw. Rahmen der Platte der beweglichen Auflage 5) fest verbunden, wogegen die oberhalb der Auflagen 2 und 5 angeordneten Versteifungsbalken 55 mit Hilfe von Druckmittelzylindern 56 auf- und abverstellbar, d.h. senkrecht zu den Auflagen 2 und 5 heb- und senkbar sind. Einzelheiten eines der Klemmbalken 20, 21 sind in Fig. 6 gezeigt, wogegen Einzelheiten eines der Versteifungsbalken 55 in Fig. 5 gezeigt sind. Fig. 5 zeigt auch die Anordnung der Druckmittelzylinder 56, welche die oberen Klemmbalken 20, 21 senkrecht zu den Auflagen 2, 5 bewegen.

In Fig. 5 ist gezeigt, daß an den Enden der Versteifungsbalken 55 auf einer Platte montiert Führungsrollen 57 vorgesehen sind, die an seitlichen, plattenförmigen Führungsansätzen 58 der Klemmbalken 20, 21 von außen her anliegen und diese senkrecht zur Ebene der Auflagen 2 und 5 führen. Um die Klemmbalken 20, 21 mit den sie antreibenden Zylindern 56 zu kuppeln, sind die Kolbenstangen 59 der Betätigungszylinder 56 mit den Führungsansätzen 58 der Klemmbalken 20, 21 gekuppelt, wogegen die Zylinder 56 an der die Führungsrollen 57 tragenden Grundplatte 60 befestigt sind. Die Gesamtanordnung der Antriebe für die Klemmbalken 20, 21 ist auch in Fig. 4 gezeigt.

Auf den einander zugekehrten Flächen der Klemmbalken 20, 21 und der Versteifungsbalken 55 sind Auflagen 61 befestigt.

In Fig. 4 ist auch gezeigt, daß bei der in den Fig. 4 bis 14 gezeigten Ausführungsform die beiden Schneidwerkzeuge und die Einrichtung 11 zum Durchtrennen der Kunststoffolie zwischen den Glasscheiben von Verbundglas auf dem der gestellfesten Auflage 2 zugeordneten Klemmbalken 20 bzw. dem dieser Auflage zugeordneten Versteifungsbalken 55 angeordnet, d.h. auf an diesen Bauteilen mittelbar oder unmittelbar befestigten Führungsschienen verschiebbar sind. Auch die Antriebe (z.B. der in Fig. 4 für die kombinierte Ritz- und Durchtrenneinrichtung (Schneidwerkzeug und Schneideinrichtung 11) zugeordnete Endlosriemen-Antrieb 61) ist auf dem Klemmbalken 20 ebenso aufgebaut wie der zugeordnete Antriebsmotor 62.

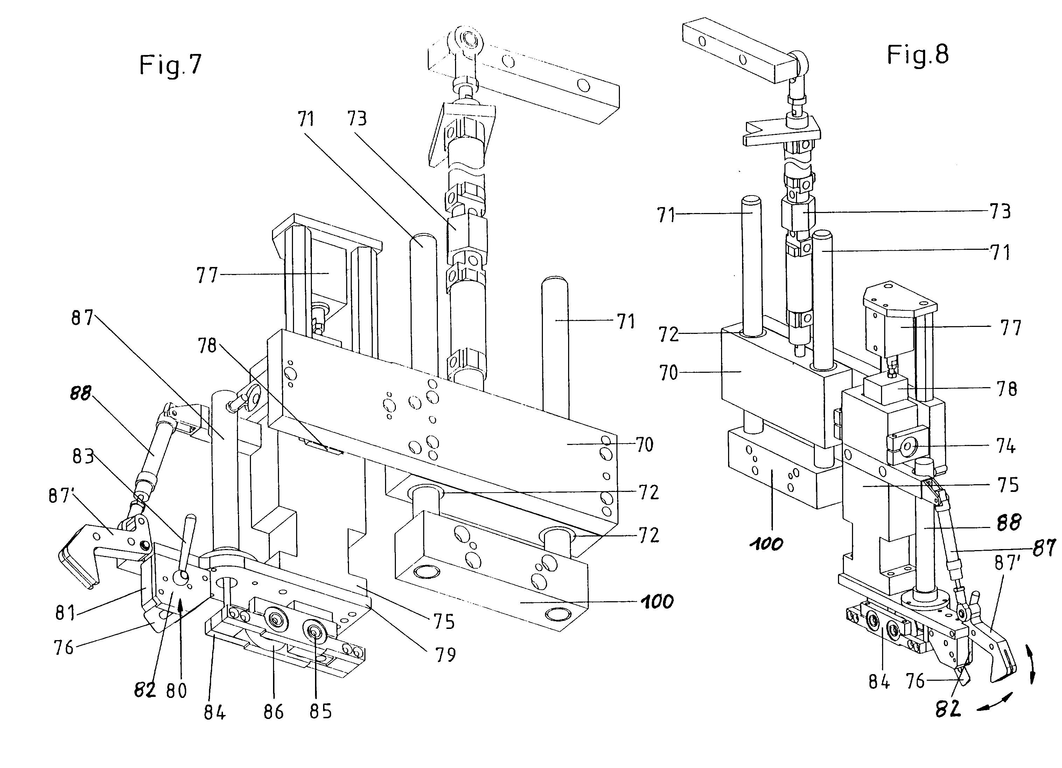

Die Einrichtung 11 zum Durchtrennen der Kunststoffolie zwischen den Glasscheiben des Verbundglases ist (siehe Fig. 7 und 8) auf einer Platte 70 montiert, die auf zwei Führungsstangen 71 über Gleitbuchsen 72 geführt ist und entlang dieser Führungsstangen 71 durch einen Druckmittelzylinder 73 senkrecht zur Ebene der beiden Auflagen 2, 5 verstellbar ist. An der Platte 70 ist um eine zu dieser parallele und horizontale Achse 74 verschwenkbar ein Halter 75 für eine Klinge 76 montiert. Die Verschwenkbarkeit des Halters 75 um die Achse 74 kann mit Hilfe eines durch einen Druckmittelzylinder 77 betätigten Arretierkeils 78 gesperrt und durch Anheben des Arretierkeils 78 wieder freigegeben werden.

Am unteren Ende des Halters 75 ist eine Grundplatte 79 montiert, die an einem Ende eine Klemmeinrichtung 80 zum Festlegen der Klinge 76 trägt. Die Klemmeinrichtung 80 besteht aus einer mit der Grundplatte 79 fest verbundenen Klingenaufnahme 81 und einer Klemmplatte 82, die mit Hilfe eines Klemmhebels 83 zum Festlegen der Klinge 76 gegen die Klingenaufnahme 81 spannbar ist.

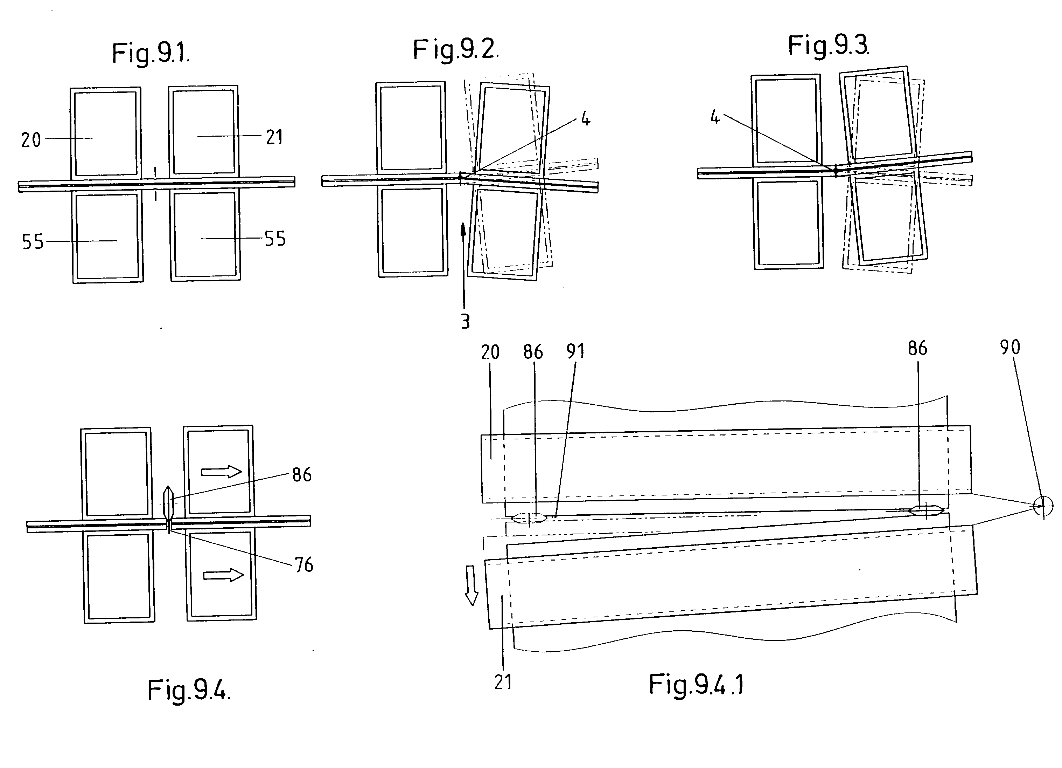

An der Grundplatte 79 ist weiters um eine Achse 85, die senkrecht zur Bewegungsrichtung der Schneidwerkzeuge im Bereich zwischen den beiden Auflagen 2 und 5 und horizontal ausgerichtet ist, ein Träger 84 für ein Meß- und Nachführrad 86 gelagert. Das freie Ende dieses Trägers 84 ist mit einem Schalter 87 gekuppelt. Das Meß- und Nachführrad 86 läuft in einem durch Auseinanderziehen der beiden Teile der Verbundglasscheibe (nach dem Brechen der beiden Glasscheiben, siehe Fig. 9) gebildeten, keilförmigen Spalt und bewegt sich beim Auflaufen auf ein allenfalls vorhandenes Hindernis im Spalt aus diesem nach oben heraus, so daß der Schalter 87 betätigt wird und bewirkt, daß die Klinge 76 aus dem Spalt herausgehoben wird. Wenn die Klinge 76 entlang des Spaltes zwischen den Verbundglasteilen bewegt wird, ist die Arretierung für die Verschwenkbarkeit des Halters 75 um die Achse 74 freigegeben (der Arretierkeil 78 ist angehoben), so daß die Klinge 76 vom an den Rändern des Spaltes entlanglaufenden Meß- und Nachführrad 86 geführt immer in der Mitte des Spaltes läuft. Statt des Schalters 87 kann auch ein das Verschwenken des Trägers 84 für das Führungsrad 86 erfassendes Element, z.B. ein elektronisches Meßlineal vorgesehen sein. Durch die von diesem abgegebenen Signale kann das (noch zu erläuternde) Verdrehen der Auflage 5 zum Öffnen des Bruches zu einem keilförmigen Spalt, so gesteuert werden, daß das Führungsrad 86 und damit die Klinge 76 hinreichend weit in den keilförmigen Spalt eintauchen, um die Folie sicher durchzuschneiden.

An der Grundplatte 79 ist weiters verschwenkbar eine Sicherheitsklappe 87' für die Klinge 76 vorgesehen, die mit Hilfe eines Druckmittelzylinders 88 in eine die Klinge 76 überdeckende und in die in Fig. 7 gezeigte, die Klinge 76 freigebende Lage verschwenkt werden kann.

An dem an den Führungsstangen 71 unten angeordneten Klotz 100 ist ein an sich bekanntes (nicht gezeigtes) Schneidwerkzeug (Schneidrädchen) für das Ritzen der oberen Glasscheibe des Verbundglases vorgesehen. Ein ähnliches Schneidwerkzeug ist auf einem unterhalb der Auflageebene für das Verbundglas auf einer Führung verfahrbaren Schlitten montiert, wobei beide Glasscheiben des Verbundglases bevorzugt von den Schneidwerkzeugen gleichzeitig, d.h. von oben und von unten her geritzt werden.

Der Ablauf der Funktionen Glasschneiden, Brechen und Folie trennen ist in Fig. 9 gezeigt und wird an Hand dieser erläutert. Aus Fig. 9 ist ersichtlich, daß bei zwischen den Klemmbalken 20, 21 und den Widerlagern 55 festgeklemmtem Verbundglas oben und unten gleichzeitig geschnitten wird (Fig. 9.1). Hierauf wird zunächst die obere (oder die untere) und dann die untere (oder die obere) Glasscheibe durch Verschwenken der beweglichen Auflage 5 gebrochen, so daß ein durchgehender Bruch entlang der vorher erzeugten Ritzlinien entsteht (Fig. 9.2 und 9.3). Hierauf wird die relativ zur maschinengestellfesten Auflage 2 bewegliche Auflage 5 zusammen mit dem Klemmbalken 21 und dem diesem (unten) gegenüberliegenden Widerlager (Versteifungsbalken) 55 um einen außerhalb der Auflagen 2, 5 liegenden Drehpunkt 90, ohne sie zu kippen, verschwenkt, so daß das vom Drehpunkt 90 entfernt liegende Ende des Bruches geöffnet und dort die Folie gespannt wird (siehe Fig. 9.4.1). Von der Meß- und Nachführrolle 86 geführt wird nun die Klinge 76 in den Spalt 91 zwischen den Verbundglasteilen abgesenkt und schneidet die Folie bei fortschreitender Bewegung entlang des Spaltes 91 durch. Dabei wird die bewegliche Auflage zunehmend verschwenkt, wie aus Fig. 9.4.1 durch die gezeigten Drehstellungen veranschaulicht ist.

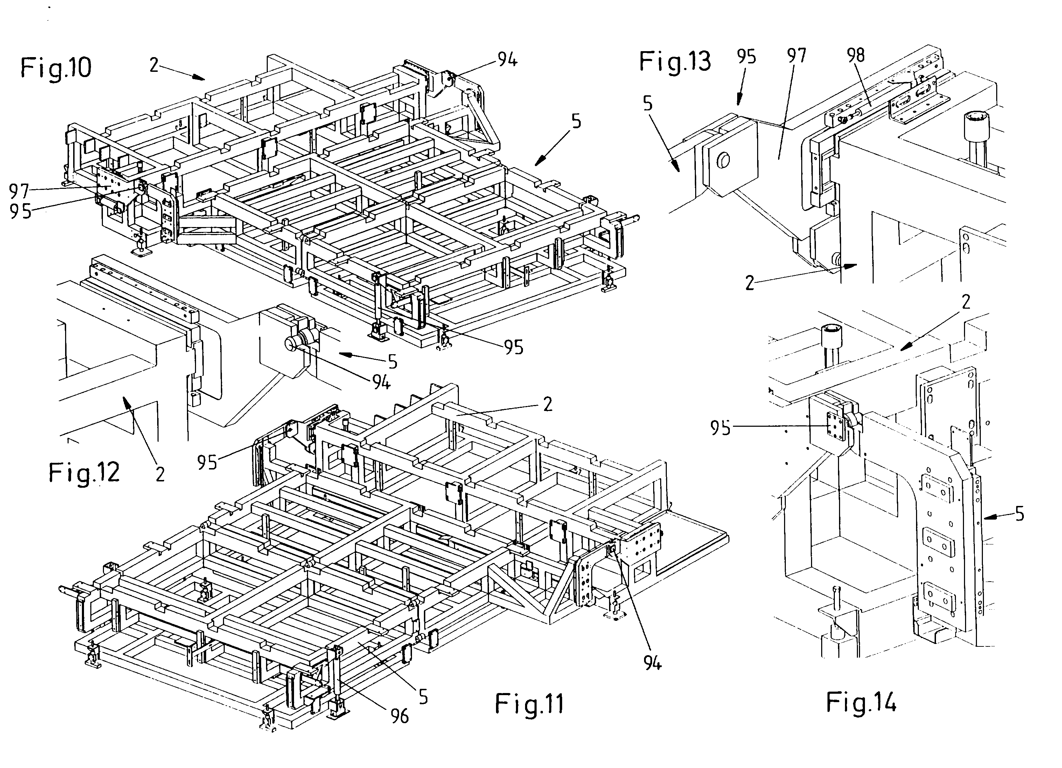

Um die bewegliche Auflage 5 zum Brechen verschwenken zu können (um eine horizontale Achse 4, die im Bereich des Spaltes 3 zwischen den beiden Auflagen 2, 5 liegt) und weiters, um eine senkrechte Achse (Drehpunkt 90), die außerhalb der Auflagen 2, 5 angeordnet ist, verdrehen zu können, ist das Maschinengestell wie in den Fig. 10 bis 14 (ohne die Platten, welche die eigentlichen Auflagen bilden) gezeigt, ausgebildet. Das der gestellfesten Auflage 2 zugekehrte Ende 6 der beweglichen Auflage 5 ist um zwei Lager 94, 95, deren Achsen sich in der Höhe der Auflagefläche (sh. Fig. 9.2. und 9.3.) befinden, verschwenkbar. Hierzu ist an dem Rahmen der beweglichen Auflage 5 an beiden Seiten ein Druckmittelzylinder 96 (entsprechend dem Zylinder 12) befestigt, mit welchem das vom Spalt 3 entfernte Ende der Auflage 5 zum Brechen von Verbundglas, nachdem dieses geritzt worden ist, heb- und senkbar (sh. Fig. 9.2 und 9.3) ist.

Zusätzlich ist eines der beiden Schwenklager, nämlich das Lager 95, in einer zur Auflagefläche parallelen Richtung (horizontal) verstellbar, wie dies in Fig. 13 und 14 gezeigt ist. Durch Betätigen des Druckmittelmotors (nicht gezeigt), der an einem Träger 97 des Lagers 95 angreift, dreht sich die bewegliche Auflage 5 um den vom Lager 94 gebildeten, in Fig. 9.4.1. gezeigten Drehpunkt 90, so daß sich der Bruch in den beiden Glasscheiben des Verbundglases, wie in Fig. 9.4.1. gezeigt, zu einem keilförmigen Spalt öffnet. Das Ausmaß des Drehens der beweglichen Auflage 5 wird durch eine z.B. elektronische Meßeinrichtung 98 erfaßt, die auch das Betätigen des Druckmittelzylinders zum Drehen der Auflage 5 steuert.

Ein Ausführungsbeispiel der Erfindung kann beispielsweise wie folgt dargestellt werden:

Eine Vorrichtung zum Teilen von Verbundglas besitzt eine gestellfest montierte Auflage 2 und eine bewegliche Auflage 5. Den Auflagen 2 und 5 sind Klemmbalken 20, 21 zum Festlegen des zu teilenden Verbundglases an den Auflagen 2 und 5 zugeordnet. Nachdem zu teilendes Verbundglas an den Auflagen 2 und 5 genau ausgerichtet durch Betätigen der Klemmbalken 20, 21 festgelegt worden ist, wird gleichzeitig die obere und die untere Glasscheibe des Verbundglases geritzt. Durch Verschwenken der einen Auflage 5 wird das Verbundglas gebrochen, darauf wird die bewegliche Auflage um einen außerhalb der Auflagen 2, 5 liegenden Schwenkpunkt 90 in der Ebene der gestellfesten Auflage 2 verdreht, so daß sich der Bruch zwischen den beiden Glasscheiben zu einem keilförmigen Spalt 91 öffnet. In den keilförmigen Spalt 91 wird ein Führungsrad 86 eingeführt, welche eine ihr nachlaufende Klinge 76 in der Mitte des Spaltes 91 führt. Die Klinge 76 ist an einem pendelnd aufgehängten Träger 75 befestigt, so daß sie dem Spalt unter der Wirkung des Führungsrades 86 folgen kann. Während des Durchtrennens der Folie mit Hilfe der Klinge 76 wird die bewegliche Auflage 5 weiter verschwenkt, so daß sich der Spalt 95 nach und nach weiter öffnet.

## Patentansprüche

1. Vorrichtung zum Teilen von Verbundglas, insbesondere ZweiScheiben-Verbundglas, mit zwei plattenförmigen Auflagen (2, 5) für das Verbundglas, wobei eine (2) der beiden im wesentlichen horizontal ausgerichteten Auflagen (2, 5) im Maschinengestell (1) starr befestigt und die andere Auflage (5) um eine im Bereich (3) zwischen den Auflagen (2, 5) angeordnete, horizontale Achse (4) verschwenkbar gelagert und in Richtung der Ebene der maschinengestellfesten Auflage (2) quer zu dieser beweglich ist, mit Einrichtungen (20, 21, 22) zum Festlegen des Verbundglases an den Auflagen (2, 5), die an den dem Bereich (3) zwischen den beiden Auflagen (2, 5) benachbarten Rändern (15, 6) der Auflagen (2, 5) angeordnet sind, mit im Bereich (3) zwischen den beiden Auflagen (2, 5) verfahrbaren Schneidwerkzeugen zum Ritzen des Verbundglases auf beiden Seiten, und mit einer Einrichtung (11) zum Durchtrennen der zwischen den beiden Glasscheiben des Verbundglases angeordneten Kunststoffolie, dadurch gekennzeichnet, daß die Einrichtung zum Durchtrennen der Kunststoffolie eine im Bereich (3) zwischen den beiden Auflagen (2, 5) verschiebbare Schneideinrichtung (11) mit einer Klinge (76) ist.

2. Vorrichtung nach Anspruch 1, dadurch gekennzeichnet, daß die Klinge (76) in einen Halter (81) eingesetzt ist, der an dem Schlitten, der auch eines der beiden Schneidwerkzeuge trägt, aufgebaut ist.

3. Vorrichtung nach Anspruch 1 oder 2, dadurch gekennzeichnet, daß der Halter (75) für die Klinge (76) auf dem von oben auf die obere Glasscheibe des Verbundglases einwirkenden Schneidwerkzeug aufgebaut ist.

4. Vorrichtung nach einem der Ansprüche 1 bis 3, dadurch gekennzeichnet, daß der Halter (75) für die Klinge (76) unabhängig von dem Schneidwerkzeug senkrecht zur Ebene der beiden Auflagen (2, 5) verstellbar ist.

5. Vorrichtung nach einem der Ansprüche 1 bis 4, dadurch gekennzeichnet, daß der Halter (75) für die Klinge (76) an zwei Führungsstäben (71), die an ihren freien Enden (90) das Schneidwerkzeug tragen, geführt ist.

6. Vorrichtung nach einem der Ansprüche 1 bis 5, dadurch gekennzeichnet, daß die Klinge (76) an dem Halter (75) mit Hilfe einer Klemmvorrichtung (80) festgeklemmt ist.

7. Vorrichtung nach einem der Ansprüche 1 bis 6, dadurch gekennzeichnet, daß der Klinge (76) eine am Halter (75) verschwenkbare Abdeckkappe (87'), die in eine die Klinge (76) abdeckende Lage schwenkbar ist, zugeordnet ist.

8. Vorrichtung nach einem der Ansprüche 1 bis 7, dadurch gekennzeichnet, daß am Halter (75) für die Klinge (76) an einem um eine zur Bewegungsrichtung der Klinge (76) senkrechte, horizontale Achse (85) verschwenkbaren Träger (84) ein frei drehbares Rad (86) gelagert ist, wobei der verschwenkbar gelagerte Träger (84) mit einem Schalter (87) gekuppelt ist.

9. Vorrichtung nach einem der Ansprüche 1 bis 8, dadurch gekennzeichnet, daß der Halter (75) für die Klinge (76) am Schlitten um eine horizontale und in der Bewegungsrichtung des Schlittens ausgerichtete Achse (74) schwenkbar gelagert ist.

10. Vorrichtung nach Anspruch 9, dadurch gekennzeichnet, daß eine von einem Linearmotor (77) betätigte Vorrichtung, z.B. ein Arretierkeil (78), zum unverschwenkbaren Festlegen des Halters (75) für die Klinge (76) vorgesehen ist.

11. Vorrichung nach einem der Ansprüche 1 bis 10, wobei die Einrichtungen zum Festlegen des Verbundglases von oben auf das Verbundglas einwirkende Klemmbalken (20, 21) sind, dadurch gekennzeichhet, daß die Klemmbalken (20, 21) an beiden Enden in zu den Ebenen der Auflagen senkrechten Führungen (57) geführt sind, und daß an den Enden der Klemmbalken (20, 21) Betätigungszylinder (56), die an den Auflagen (2, 5) abgestützt sind und an den Enden der Klemmbalken (20, 21) angreifen, angeordnet sind.

12. Vorrichtung nach einem der Ansprüche 1 bis 11, dadurch gekennzeichnet, daß in der Mitte der Klemmbalken (20, 21) nach oben weisende Steher (50) vorgesehen sind, und daß zwischen dem oberen Ende jedes Stehers (50) und den beiden Enden jeden Klemmbalkens (20, 21) je eine Zugstange (51) gespannt ist.

13. Vorrichtung nach einem der Ansprüche 1 bis 12, dadurch gekennzeichnet, daß der in der Mitte des Klemmbalkens (20, 21) nach oben weisende Steher (50) längenveränderlich ausgebildet ist.

14. Vorrichtung nach Anspruch 13, dadurch gekennzeichnet, daß der längenveränderliche Steher (50) ein Druckmittelzylinder ist.

15. Vorrichtung nach einem der Ansprüche 1 bis 14, dadurch gekennzeichnet, daß die um eine horizontale Achse (4) verschwenkbare Auflage (5) um einen seitlich des Bereiches zwischen den Auflagen (2, 5) angeordneten Drehpunkt (90) in einer mit der Ebene der gestellfesten Auflage (2) fluchtenden Ebene verdrehbar ist.

16. Vorrichtung nach Anspruch 15, dadurch gekennzeichnet, daß eines (94) der Schwenklager (94, 95) der beweglichen Auflage (5) am Rahmen (1) der Vorrichtung starr montiert ist und daß das andere Schwenklager (95) an einem parallel zur Ebene der gestellfesten Auflage (2) verschiebbaren Hilfsträger (97) montiert ist.

17. Vorrichtung nach einem der Ansprüche 1 bis 16, dadurch gekennzeichnet, daß der Halter (75) für die Klinge (76) an einer Platte (70) montiert ist, die am Schlitten des einen Schneidwerkzeuges aufgebaut ist.

18. Vorrichtung nach Anspruch 17, dadurch gekennzeichnet, daß der Halter (75) für die Klinge (76) an der Platte (70) um eine horizontale und in Bewegungsrichtung des Schlittens ausgerichtete Achse (74) verschwenkbar ist.

19. Vorrichtung nach einem der Ansprüche 1 bis 18, dadurch gekennzeichnet, daß den dem Bereich (3) zwischen den beiden Auflagen (2, 5) benachbarten Rändern (6, 15) der beiden Auflagen (2, 5) Versteifungsbalken (55) zugeordnet sind.

20. Vorrichtung nach Anspruch 19, dadurch gekennzeichnet, daß in der Mitte der Versteifungsbalken nach unten weisende Steher (50) vorgesehen sind, von denen Zugstangen (51) zu den Enden der Versteifungsbalken (55) führen.

21. Vorrichtung nach Anspruch 20, dadurch gekennzeichnet, daß die Steher (50) längenveränderlich sind.

22. Vorrichtung nach Anspruch 21, dadurch gekennzeichnet, daß die Steher Druckmittelmotore (50) sind.

23. Vorrichtung nach einem der Ansprüche 1 bis 22, dadurch gekennzeichnet, daß auf den einander zugekehrten Flächen der Klemmbalken (20) und der Versteifungsbalken (Widerlager 55) Auflagen (61) vorgesehen sind, die unmittelbar an dem zu teilenden Verbundglas anliegen, wobei die Auflagen (61) an den Versteifungsbalken (55) mit der Oberseite der Auflage (2 und 5) fluchten.

24. Vorrichtung nach einem der Ansprüche 1 bis 23, dadurch gekennzeichnet, daß am Halter (75) ein Führungsrad (86) angeordnet ist.

25. Vorrichtung nach Anspruch 24, dadurch gekennzeichnet, daß das Führungsrad (86) frei drehbar an einem Träger (84) gelagert ist und daß der Träger (84) am Halter (75) oder an einer an diesem befestigten Grundplatte (79) verschwenkbar montiert ist.

26. Vorrichtung nach Anspruch 25, dadurch gekennzeichnet, daß zwischen dem der Schwenkachse (85) des Trägers (84) gegenüberliegenden Ende desselben und dem Halter (75) ein Schalter (87) oder ein die Bewegungen des Trägers (84) erfassendes Meßlineal vorgesehen ist.

27. Vorrichtung nach einem der Ansprüche 24 bis 26, dadurch gekennzeichnet, daß das Führungsrad (86), bezogen auf die Bewegungsrichtung der Schneideinrichtung (11), vor der Klinge (76) angeordnet ist.

28. Vorrichtung nach einem der Ansprüche 1 bis 27, dadurch gekennzeichnet, daß zum Festlegen der Schnittlage ein verstellbarer Anschlag (43) für das Verbundglas vorgesehen ist.

29. Vorrichtung nach Anspruch 28, dadurch gekennzeichnet, daß der Anschlag (43) der verschwenkbaren Auflage (5) zugeordnet ist.

30. Vorrichtung nach Anspruch 28 oder 29, dadurch gekennzeichnet, daß über der beweglichen Auflage (5) eine Anschlagleiste (43) für das Verbundglas vorgesehen ist, die auf Schlitten (42) befestigt ist, die ihrerseits auf gestellfesten Führungsschienen (40), die neben den Querrändern der Auflage (5) vorgesehen sind, verschiebbar sind.

31. Vorrichtung nach Anspruch 30, dadurch gekennzeichnet, daß die Anschlagleiste (43) von Armen (45) getragen ist, die an einer Welle (44) befestigt sind, die mit ihren Enden in den Schlitten (42) gelagert und von wenigstens einem Druckmittelmotor (46) verdrehbar ist, so daß die Anschlagleiste (43) gehoben und gesenkt werden kann.

32. Vorrichtung nach einem der Ansprüche 1 bis 31, dadurch gekennzeichnet, daß die Einrichtung zum Festlegen von Verbundglas an den Auflagen (2, 5) an wenigstens einer Auflage als Unterdrucksaugvorrichtung (22), die aus mehreren im Bereich des der anderen Auflage (2, 5) benachbarten Randes (15, 6) der Auflagen (2, 5) angeordneten Saugern (22) besteht, ausgebildet ist.

## Claims

1. Device for dividing compound glass, particularly two-pane compound glass, with two plate-shaped supports (2, 5) for the compound glass, one (2) of the two substantially horizontally aligned supports (2, 5) being rigidly attached in the machine frame (1) and the other support (5) being mounted to pivot about a horizontal axis (4) disposed in the area (3) between the supports (2, 5) and being movable in the direction of the plane of the support (2) fixed to the frame and transversely thereto, with devices (20, 21, 22) for securing the compound glass on the supports (2, 5), which are disposed in the edges (15, 6) of the supports (2, 5) adjacent to the area (3) between the two supports (2, 5), with cutting tools movable in the area (3) between the two supports (2, 5) for scoring the compound glass on both sides, and with a device (11) for separating the plastic film located between the two glass panes of the compound glass,
characterised in that the device for separating the plastic film is a cutter device (11) movable in the area (3) between the two supports (2, 5), with a blade (76).

2. Device according to claim 1, characterised in that the blade (76) is inserted in a holder (81) which is constructed on the slide which also carries one of the two cutter tools.

3. Device according to claim 1 or 2, characterised in that the holder (75) for the blade (76) is constructed on the cutter tool acting from above on the upper glass pane of the compound glass.

4. Device according to one of claims 1 to 3,
characterised in that the holder (75) for the blade (76) is displaceable independently of the cutter tool vertically to the plane of the two supports (2, 5).

5. Device according to one of claims 1 to 4,
characterised in that the holder (75) for the blade (76) is guided on two guide rods (71) which carry the cutter tool on their free ends (90).

6. Device according to one of claims 1 to 5,
characterised in that the blade (76) is clamped securely on the holder (75) with the aid of a clamping device (80).

7. Device according to one of claims 1 to 6,
characterised in that there is associated with the blade (76) a cover flap (87') pivotal on the holder (75) and which is pivotal to a position covering the blade (76).

8. Device according to one of claims 1 to 7,
characterised in that there is mounted on the holder (75) for the blade (76), on a carrier (84) pivotal about an axis (85) which is horizontal and vertical to the direction of movement of the blade (76), a freely rotatable wheel (86), the pivotally mounted carrier (84) being coupled to a switch (87).

9. Device according to one of claims 1 to 8,
characterised in that the holder (75) for the blade (76) is mounted to pivot on the slide about a horizontal axis (74) aligned in the direction of movement of the slide.

10. Device according to claim 9, characterised in that a device actuated by a linear motor (77), e.g. a stopping wedge (78), is provided in order to secure the holder (75) for the blade (76) in a non-pivotal manner.

11. Device according to one of claims 1 to 10, the devices for securing the compound glass being clamp beams (20, 21) acting from above on the compound glass, characterised in that the clamp beams (20, 21), are guided at both ends in guides (57) vertical to the planes of the supports, and in that there are located at the ends of the clamp beams (20, 21) actuating cylinders (56) which are supported on the support brackets (2, 5) and engage on the ends of the clamp beams (20, 21).

12. Device according to one of claims 1 to 11,
characterised in that there are provided in the centre of the clamp beams (20, 21) upwardly-aligned pillars (50), and in that a draw bar (51) is respectively mounted between the upper end of each pillar (50) and the two ends of each clamp beam (20, 21).

13. Device according to one of claims 1 to 12,
characterised in that the upwardly-aligned pillar (50) in the centre of the clamp beam (20, 21) is length; adjustable in design.

14. Device according to claim 13, characterised in that the length-adjustable pillar (50) is a pressure medium cylinder.

15. Device according to one of claims 1 to 14,
characterised in that the support (5) pivotal about a horizontal axis (4) is rotatable about a point of rotation (90) located laterally of the area between the supports (2, 5) in a plane flush with the plane of the support (2) fixed to the frame.

16. Device according to claim 15, characterised in that one (94) of the pivotal bearings (94, 95) of the movable support (5) is rigidly mounted on the frame (1) of the device, and in that the other pivotal bearing (95) is mounted on an auxiliary carrier (97) displaceable parallel to the plane of the support (2) fixed to the frame.

17. Device according to one of claims 1 to 16,
characterised in that the holder (75) for the blade (76) is mounted on a plate (70) which is constructed on the slide of one cutter tool.

18. Device according to claim 17, characterised in that the holder (75) for the blade (76) is pivotal about an axis (74) which is horizontal and aligned in the direction of movement of the slide.

19. Device according to one of claims 1 to 18,
characterised in that reinforcing beams (55) are associated with the edges (6, 15) of the two supports (2, 5) adjacent to the region (3) between the two supports (2, 5).

20. Device according to claim 19, characterised in that there are provided in the centre of the reinforcing beams downwardly-aligned pillars (50), from which draw bars (51) lead to the ends of the reinforcing beams (55).

21. Device according to claim 20, characterised in that the pillars (50) are length-adjustable.

22. Device according to claim 21, characterised in that the pillars are pressure-medium motors (50).

23. Device according to claims 1 to 22, characterised in that there are provided on the mutually-facing surfaces of the clamp beams (20) and of the reinforcing beams (abutments 55), supports (61) which abut directly on the compound glass to be cut, the supports (61) being flush on the reinforcing beams (55) with the upper side of the supports (2 and 5).

24. Device according to one of claims 1 to 23,
characterised in that a guide wheel (86) is located on the holder (75).

25. Device according to claim 24, characterised in that the guide wheel (86) is freely rotatably mounted on a carrier (84), and in that the carrier (84) is mounted to pivot on the holder (75) or on a base plate (79) attached thereto.

26. Device according to claim 25, characterised in that there is provided between the end of the carrier (84) lying opposite the pivotal axis (85) of said carrier (84) and the holder (75) a switch (87) or a measuring straight edge detecting the movements of the carrier (84).

27. Device according to one of claims 24 to 26, characterised in that the guide wheel (86), with reference to the direction of movement of the cutter device (11), is located in front of the blade (76).

28. Device according to one of claims 1 to 27,
characterised in that, in order to secure the cutting position, a movable stop means (43) for the compound glass is provided.

29. Device according to claim 28, characterised in that the stop means (43) is associated with the pivotal support (5).

30. Device according to claim 28 or 29, characterised in that there is provided above the movable support (5) a stop bar (43) for the compound glass, which is secured on slide (42), which in turn are displaceable on guide rails (40) fixed to the frame and which are provided next to the transverse edges of the support (5).

31. Device according to claim 30, characterised in that the stop bar (43) is carried by arms (45) which are secured on a shaft (44) which is mounted by its ends in the slide (42) and is rotatable by at least one pressure medium motor (46), so that the stop bar (43) can be raised and lowered.

32. Device according to one of claims 1 to 31,
characterised in that the device for securing compound glass on the supports (2, 5) is designed on at least one support as a vacuum suction device (22) which is formed from a plurality of suction means (22) located in the region of the edge (15, 6) of the supports (2, 5) adjacent to the other supports (2, 5).

## Revendications

1. Dispositif pour découper du verre feuilleté, notamment du verre feuilleté à deux feuilles, comportant deux appuis (2, 5) en forme de plateaux pour la plaque de verre feuilleté, l'un (2) des deux appuis (2, 5) disposés sensiblement horizontalement étant fixé rigidement au bâti (1) de la machine et l'autre appui (5) étant monté pivotant autour d'un axe (4) horizontal situé dans la zone (3) entre les appuis (2, 5), et pouvant être déplacé en direction du plan de l'appui (2) solidaire du bâti de machine, transversalement à celui-ci, des dispositifs (20, 21, 22) pour brider la plaque de verre feuilleté sur les appuis (2, 5), qui sont disposés sur les bords (15, 6) des appuis (2, 5), voisins de la zone (3) entre lesdits appuis (2, 5), des outils de coupe qui peuvent être déplacés dans la zone (3) entre les deux appuis (2, 5), pour rayer le verre feuilleté sur ses deux faces et un dispositif pour couper le film de matière plastique disposé entre les deux feuilles de verre du verre feuilleté, caractérisé par le fait que le dispositif de coupe du film de matière plastique est un dispositif de coupe (11), pourvu d'une lame (76), qui peut être déplacé en translation dans la zone (3) entre les deux appuis (2, 5).

2. Dispositif selon la revendication 1, caractérisé par le fait que la lame (76) est montée dans un porte-lame (81) qui est fixé au chariot qui porte également l'un des deux outils de coupe.

3. Dispositif selon la revendication 1 ou 2, caractérisé par le fait que le porte-lame (75) pour la lame (76) est fixé sur l'outil de coupe qui agit par le haut sur la feuille de verre supérieure du verre feuilleté.

4. Dispositif selon l'une des revendications 1 à 3, caractérisé par le fait que le porte-lame (75) pour la lame (76) peut être déplacé perpendiculairement au plan des deux appuis (2, 5), indépendamment de l'outil de coupe.

5. Dispositif selon l'une des revendications 1 à 4, caractérisé par le fait que le porte-lame (75) pour la lame (76) est guidé sur deux tiges de glissières (71) qui, à leurs extrémités (90) libres, portent l'outil de coupe.

6. Dispositif selon l'une des revendications 1 à 5, caractérisé par le fait que la lame (76) est fixée sur le porte-lame (75) à l'aide d'un dispositif de serrage (80).

7. Dispositif selon l'une des revendications 1 à 6, caractérisé par le fait qu'un protège-lame (87') qui est monté pivotant sur le porte-lame (75) et peut être amené par pivotement dans une position dans laquelle il masque la lame (76), est associé à la lame (76).

8. Dispositif selon l'une des revendications 1 à 7, caractérisé par le fait qu'une roue (86) libre en rotation est montée sur un support (84) qui peut pivoter autour d'un axe (85) horizontal, perpendiculaire à la direction de déplacement de la lame (76), sur le porte-lame (75) pour la lame (76), le support (84) pivotant étant couplé à un commutateur (87).

9. Dispositif selon l'une des revendications 1 à 8, caractérisé par le fait que le porte-lame (75) pour la lame (7 6) est monté sur le chariot avec possibilité de pivotement autour d'un axe (74) horizontal orienté dans la direction de déplacement du chariot.

10. Dispositif selon la revendication 9, caractérisé par le fait qu'un dispositif, par exemple une clavette de blocage (7 8), actionné par un moteur linéaire (77) est prévu pour immobiliser en rotation le porte-lame (75) pour la lame (76).

11. Dispositif selon l'une des revendications 1 à 10, dans lequel les dispositifs pour le bridage de la plaque de verre feuilleté sont des règles de serrage (20, 21) qui agissent par le haut sur la plaque de verre feuilleté, caractérisé par le fait que les règles de serrage (20, 21) sont guidées à leurs deux extrémités dans des glissières (57) perpendiculaires aux plans des appuis (2, 5) et par le fait que des vérins d'actionnement (56) qui prennent appui sur les appuis et agissent sur les extrémités des règles de serrage (20, 21) sont disposés aux extrémités des règles de serrage (20, 21).

12. Dispositif selon l'une des revendications 1 à 11, caractérisé par le fait que des jambages (50) dirigés vers le haut sont prévus au milieu des règles de serrage (20, 21) et par le fait qu'un tirant (51) est placé chaque fois entre l'extrémité supérieure de chaque jambage (50) et les deux extrémités de chaque règle de serrage (20, 21).

13. Dispositif selon l'une des revendications 1 à 12, caractérisé par le fait que le jambage (50) dirigé vers le haut placé au milieu de la règle est réglable en longueur.

14. Dispositif selon la revendications 13, caractérisé par le fait que le jambage (50) réglable en longueur est un vérin à fluide sous pression.

15. Dispositif selon l'une des revendications 1 à 14, caractérisé par le fait que l'appui (5) pivotant autour d'un axe (4) horizontal peut pivoter autour d'un point (90) d'articulation qui est situé sur le côté de la zone entre les appuis (2, 5), dans un plan qui est aligné avec le plan de l'appui (2) solidaire du bâti.

16. Dispositif selon la revendication 15, caractérisé par le fait que l'un (94) des paliers d'articulation (94, 95) de l'appui (5) mobile est monté rigidement sur le bâti (1) du dispositif et par le fait que l'autre palier (95) d'articulation est monté sur un support auxiliaire (97) qui peut coulisser parallèlement au plan de l'appui (2) solidaire du bâti.

17. Dispositif selon l'une des revendications 1 à 16, caractérisé par le fait que le porte-lame (75) pour la lame (76) est monté sur une platine (70) qui est fixée au chariot de l'un des outils de coupe.

18. Dispositif selon la revendication 17, caractérisé par le fait que le porte-lame (75) pour la lame (76) peut pivoter sur la platine (70), autour d'un axe (74) horizontal orienté dans la direction de déplacement du chariot.

19. Dispositif selon l'une des revendications 1 à 18, caractérisé par le fait que des poutres (55) de rigidification sont associées aux bords (6, 15) des deux appuis (2, 5) voisins de la zone (3) entre les deux appuis (2, 5).

20. Dispositif selon la revendication 19, caractérisé par le fait que des jambages (50) tournés vers le bas, à partir desquels des tirants (51) mènent aux extrémités des poutres de rigidification (55), sont prévus au milieu des poutres de rigidification.

21. Dispositif selon la revendication 20, caractérisé par le fait que les jambages (50) sont réglables en longueur.

22. Dispositif selon la revendication 21, caractérisé par le fait que les jambages sont des moteurs (50) à fluide sous pression.

23. Dispositif selon l'une des revendications 1 à 22, caractérisé par le fait que des appuis (61) qui viennent directement en contact avec le verre feuilleté à couper sont prévus sur les surfaces en vis-à-vis des règles de serrage (20) et des poutres de rigidification (contre-appui 55), les appuis (61) sur les poutres de rigidification (55) étant alignés avec la face supérieure des appuis (2 et 5).

24. Dispositif selon l'une des revendications 1 à 23, caractérisé par le fait qu'une roue de guidage (86) est disposée sur le porte-lame (75).

25. Dispositif selon la revendication 24, caractérisé par le fait que la roue de guidage (86) est montée libre en rotation sur un support (84) et par le fait que le support (84) est monté pivotant sur le porte-lame (75) ou sur une plaque (79) de base fixée à celui-ci.

26. Dispositif selon la revendication 25, caractérisé par le fait qu'un commutateur (87) ou une règle de mesure qui détermine les déplacements du support (84) est prévu entre l'extrémité du support (84) éloignée de l'axe (85) de rotation dudit support et le porte-lame (75).

27. Dispositif selon l'une des revendications 24 à 26, caractérisé par le fait que la roue de guidage (86) est disposée avant la lame (76) par rapport à la direction de déplacement du dispositif de coupe (11).

28. Dispositif selon l'une des revendications 1 à 27, caractérisé par le fait qu'une butée réglable (43) pour la plaque de verre feuilleté est prévue pour fixer la position de coupe.

29. Dispositif selon la revendication 28, caractérisé par le fait que la butée (43) est associée à l'appui (5) pivotant.

30. Dispositif selon la revendication 28 ou 29, caractérisé par le fait qu'une règle de butée (43) pour la plaque de verre feuilleté est prévue au-dessus de l'appui (5) mobile, laquelle règle de butée est fixée sur des chariots (42) qui, de leur côté, peuvent coulisser sur des rails de guidage (40) solidaires du bâti, prévus à côté des bords transversaux de l'appui (5).

31. Dispositif selon la revendication 30, caractérisé par le fait que la règle de butée (43) est portée par des bras (45) qui sont fixés à un arbre (44) dont les extrémités sont montées dans les chariots (42) et qui peut être entraîné en rotation par au moins un moteur (46) à fluide sous pression de telle sorte que la règle de butée (43) puisse être soulevée et abaissée.

32. Dispositif selon l'une des revendications 1 à 31, caractérisé par le fait que le dispositif de bridage de la plaque de verre feuilleté sur les appuis (2, 5), sur au moins un des appuis est agencé sous forme de dispositif à dépression (22) formé de plusieurs ventouses (22) disposées dans la région du bord (15, 6) des appuis (2, 5) voisine de l'autre appui (2, 5).
